# EUROPÄISCHE PATENTSCHRIFT

(11) **EP 2 152 554 B1**
(45) Veröffentlichungstag und Bekanntmachung des Hinweises auf die Patenterteilung: **08.01.2014**
(21) Anmeldenummer: 08749170.0
(22) Anmeldetag: 26.04.2008
(51) Int. Cl.: B60T 8/32, B60T 13/74

(54) **MODULATOR**
MODULATOR
ÉLÉMENT DE MODULATION

(30) Priorität: 09.05.2007 DE 102007021646
(43) Veröffentlichungstag der Anmeldung: 17.02.2010
(73) Patentinhaber: WABCO GmbH, 30453 Hannover (DE)
(72) Erfinder: BROCKMANN, Christoph, 30966 Hemmingen (DE); DEIKE, Claudia, 30982 Pattensen (DE); GRIMM, Matthias, 30457 Hannover (DE); ROSENDAHL, Hartmut, 30167 Hannover (DE); TORHOFF, Ingo, 30890 Barsinghausen (DE); WOLFF, Hans-Klaus, 31832 Springe (DE)
(86) Internationale Anmeldenummer: PCT/EP2008/003396
(87) Internationale Veröffentlichungsnummer: WO 2008/138469

(56) Entgegenhaltungen:
- EP-A- 0 467 112
- DE-A1- 4 227 084
- DE-A1- 4 339 570
- DE-A1- 10 211 280
- DE-A1- 19 733 379
- DE-A1- 19 832 167

## Beschreibung

Die Erfindung betrifft ein Fahrzeugsystem mit einem Zentralmodul und einem Modulator, insbesondere einen Druckmodulator in einem Bremssystem, wobei der Modulator über einen Datenbus mit einem Zentralmodul in Verbindung steht sowie die Verwendung eines solchen Modulators. Ferner betrifft die Erfindung ein Fahrzeugsystem mit mindestens einem erfindungsgemäßen Modulator.

Aus der DE 198 54 788 A1 ist ein Radmodul für ein Fahrzeug bekannt. Dieses Radmodul dient zur Steuerung der Bremskraft in einem elektrisch ansteuerbaren Bremssystem (EBS). Dieses Radmodul erhält als Eingangssignale Raddrehzahlsignale und weitere Signale, welche direkt am Fahrzeugrad erfasst werden. Die Signalverarbeitung der Raddrehzahlsignale und der weiteren Signale erfolgt hierbei direkt in dem Radmodul. Ferner steht dieses Radmodul über einen Datenbus mit einem Zentralmodul in Verbindung.

Ein Nachteil der vorbekannten Lösung besteht darin, dass ein komplex aufgebautes Radmodul verwendet werden muss, damit die Signalverarbeitung der Raddrehzahlsignale und der weiteren Signale direkt im Radmodul erfolgen kann. Ein Solches Radmodul muss also über eine große "Intelligenz" in Form von z. B. Mikroprozessorschaltungen verfügen. Durch einen solchen komplexen Aufbau ist das bekannte Radmodul sehr teuer in der Herstellung. Weiterhin ist das Radmodul mit einem Zentralmodul verbunden, wobei allerdings nur eher untergeordneten Berechnungen in dem Zentralmodul erfolgen und mittels eines Datenbusses an das Radmodul übertragen werden. Dennoch muss auch das Zentralmodul über eine gewisse "Intelligenz" verfügen, damit diese untergeordneten Berechnungen durchgeführt werden können. Somit weist ein Bremssystem welches ein bekanntes Radmodul und ein bekanntes Zentralmodul umfasst eine Vielzahl von Bauteilen mit jeweils einer eigenen "Intelligenz" auf, was das Bremssystem an sich, und auch die Pflege des Bremssystems insgesamt sehr aufwendig, und damit teuer macht. Weiterhin ist es von Nachteil, dass für das Ersatzgeschäft (Austauschteil, Reparatur, etc.) eine Vielzahl verschiedener Baugruppen vorgehalten werden muss. Ein weiterer Nachteil besteht darin, dass Änderungen einzelner Baugruppen sehr zeit- und kostenintensiv sind, da die Verträglichkeit mit vielen anderen Bauteilen sichergestellt werden muss. Es ist des weiteren von Nachteil, dass nur eine schlechte Wiederverwendung der vorhandenen Baugruppen erfolgen kann. Ebenfalls ist es nachteilig, dass aufgrund der in geringer Stückzahl gefertigten aufwendigen Baugruppen die Kosten für diese Baugruppen sehr hoch sind.

Aus der DE 43 39 570 A1 geht ein elektronisches Bremssystem hervor, das ein Zentralmodul und den Bremskreisen oder Radgruppen zugeordnete Bremsmodule aufweist, die sich austauschen können. Das Zentralmodul hat die Aufgabe, ABS/ASR-Berechnungen durchzuführen, die Bremskraftverteilung einzustellen und radspezifische Bremsdruck-Sollwerte zu ermitteln. Die Bremsdruck-Sollwerte werden über ein Bussystem an die Bremsmodule übertragen, die als autonome Einheiten ausgebildet sind und Druckregler zur Einstellung von Bremsdrücken beinhalten.

Aus der DE 197 33 379 A1 geht ein Verfahren und eine Vorrichtung zur Steuerung einer Bremsanlage hervor. Dort empfängt die die Radbremsen steuernde Steuereinheit Sollgrößen zur Steuerung. Abhängig von diesen Sollgrößen wird von der die Radbremsen steuernden Steuereinheit ebenfalls eine Druckregelung durchgeführt.

Aufgabe der Erfindung ist es daher, ein Fahrzeugsystem mit einem Modulator zu schaffen, welcher universell einsetzbar ohne Vorbereitung mehrfach in einer Applikation eingesetzt werden kann, und wobei dieser Modulator über ein schnelles Datenbussystem von einem Zentralmodul gesteuert wird.

Generell kann der Modulator überall dort eingesetzt werden, wo dezentral Messwerte gesammelt und ein Druck geregelt und/oder Magnetventile angesteuert und/oder Motoren gestellt werden müssen.

Ein Vorteil des erfindungsgemäßen Modulators besteht darin, dass die Komplexität eines Systems in welchem der Modulator eingesetzt wird, z. B. in einem Bremssystem, reduziert wird. Durch den einfachen Aufbau ist die Pflege bzw. Wartung des Modulators drastisch erleichtert.

Vorteilhafterweise kann der Modulator als Druckmodulator in einem elektronischen Bremssystem (EBS) oder in einem konventionellen Bremssystem mit einem Anti-Blockiersystem (ABS) oder mit einem elektronischen Stabilitätsprogramm (ESC) oder in einer Luftfederungsanlage o. ä. eingesetzt werden.

Ein weiterer Vorteil der Erfindung besteht darin, dass die notwendigen Rechenoperationen nur noch in einem Zentralmodul durchgeführt werden, wodurch die "Intelligenz" in einem System, z. B. in einem Bremssystem, zentralisiert wird. Durch eine solche Zentralisierung wird die Pflege des Systems erleichtert, da z. B. eine benötigte Systemsoftware nur in das Zentralmodul und nicht noch in ein oder mehrere Modulatoren eingespielt werden muss. Der Modulator erfährt also erst durch seinen Einbau seine Bestimmung.

Ferner ist es von Vorteil, dass durch einen einfach aufgebauten Modulator nur noch ein Bauteil vorgehalten werden muss, wodurch die Stückzahl steigt und damit die Kosten für dieses Bauteil sinken. Ferner sind eventuell durchzuführende Änderungen an dem Modulator weitgehend von dem Zentralmodul entkoppelt.

Der erfindungsgemäße Modulator ist vorteilhafterweise reduziert auf die notwendigen Resourcen eines Druckmodulators, z. B. Prozessor, Endstufen, Eingänge für zwei Raddrehzahlsensoren, Eingang für einen Drucksensor. Es erfolgt die Auswahl eines integrationsfähigen angepassten Rechnerkerns. Hierdurch kann eine Integration der kompletten Schaltung in ein ASIC erfolgen. Dieses ASIC ist vorteilhafterweise in einem Hochvoltprozess ausgeführt, wodurch eine separate Spannungsversorgung unnötig wird.

Ein weiterer Vorteil des Modulators besteht darin, dass erst durch die Verbindung des Modulators mit dem Zentralmodul ein Regelkreis geschlossen wird.

In einer ersten bevorzugten Ausführungsform erhält der Modulator von dem Zentralmodul Signale in Form eines EIN-/AUS-Telegramms, wodurch z. B. an dem Modulator angeschlossene Ventile geöffnet oder geschlossen werden.

In einer zweiten bevorzugten Ausführungsform kann das Zentralmodul auch in einem Modulator integriert sein.

In einer dritten bevorzugten Ausführungsform des Modulators bei einem Fahrzeugbremssystem wird das ASIC mit den Ventilen zur Druckmodulation kombiniert. Das Ergebnis ist ein 1k-Druckmodulator (ein Druckregelkreis für eine Achse). Wird ein 2k-Druckmodulator (zwei Druckregelkreise) auf einer Achse benötigt, setzt man zwei ASICs in einen entsprechenden Ventilblock ein.

Weiterhin ist es von Vorteil, eine schnelles Datenbussystem, z. B. Flexray, einzusetzen. Vorteilhafterweise ist die Übertragungsrate des verwendeten Datenbussystems ≥ 1 Mbit/s und die Wiederholrate der Druckbotschaften sind bevorzugt ≤ 5 ms.

Im Folgenden wird das erfindungsgemäße Fahrzeugsystem mit einem Modulator anhand von Ausführungsbeispielen beschrieben. Gleiche Bauteile tragen hierbei identische Bezugszeichen. Hierbei zeigt:
- Fig. 1: den prinzipiellen Aufbau des erfindungsgemäßen Modulators,
- Fig. 2: den Einsatz des Modulators in einem EBS 4S3M-Systems,
- Fig. 3: den Einsatz des Modulators in einem EBS 6S6M-Systems und
- Fig. 4: den Einsatz des Modulators in einem ABS 4S4M-Systems.

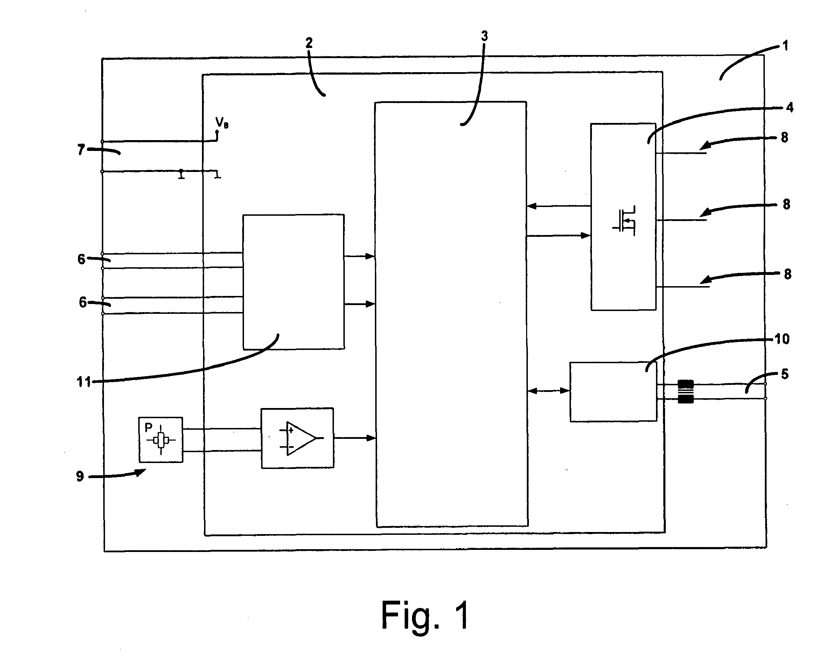

Fig. 1 zeigt den prinzipiellen Aufbau des erfindungsgemäßen Modulators in Form eines Blockdiagramms. Der Modulator (1) umfasst hierbei ein ASIC (2) mit einem Hauptprozessor (3) mit integriertem oder separatem Speicher, z. B. einem EEPROM und/oder einem ROM und/oder einem RAM. Ebenfalls sind Endstufen (4) zur Betätigung von elektromagnetischen Ventilen, welche an den Ausgängen (8) angeschlossen werden auf dem ASIC (2) und/oder dem Modulator (1) realisiert, wobei mindestens eine Endstufe (4) stromgeregelt sein kann. Die von den Endstufen (4) betätigbaren Ventile sind beispielsweise in einem Ventilblock montiert. Ferner weist das ASIC (2) mindestens einen Ein-/bzw. Ausgang (5) für einen Datenbus, z. B. in Form einer Busschnittstelle, auf. Diesem mindestens einen Ein-/bzw. Ausgang (5) kann ein so genannter Bustreiber (10) nachgeschaltet sein. Des weiteren ist mindestens ein Eingang (6) für einen Raddrehzahlsensor vorgesehen. Das ASIC (2) verfügt über mindestens eine Signalaufbereitung (11), welche die Signale induktiver und/oder aktiver Raddrehzahlsensoren für den Hauptprozessor (3) aufbereiten kann. Das ASIC (2) kann weiterhin über zusätzliche Eingänge (9) für nicht kompensierte Drucksensorelemente oder hier nicht dargestellte voll-kompensierte Drucksensoren verfügen. Selbstverständlich wird das ASIC (2) über einen weiteren Eingang (7) mit Betriebsspannung versorgt. Weitere Elemente des ASIC (2) wie beispielsweise eine Spannungsaufbereitung, eine Messeinrichtung zur Messung des Laststromes, ein- oder mehrere Analog-Digital-Wandler sowie Buscontroller und Busguardian sind hier nicht explizit gezeigt.

Über den mindestens einen Ein-/ bzw. Ausgang des Datenbusses erhält das ASIC (2) Steuerbefehle von einem Zentralmodul. Diese Steuerbefehle können im einfachsten Fall gemäß einer ersten Ausführungsform als EIN-/AUS-Telegramm übertragen werden. Das ASIC (2) steuert dann in Abhängigkeit dieser Steuerbefehle über die Endstufen (4) elektromagnetische Ventile und/oder Stellmotoren an den Ausgängen an, welche sich daraufhin öffnen bzw. schließen oder verstellen. Bei einer Fahrzeugbremsanlage kann es sich hierbei um Ventile in eines Bremskreises, z. B. um ABS-Ventile, handeln.

Aufgrund der freien Konfigurierbarkeit der Ein- und Ausgänge des Modulators (1) und der Reduktion der Funktion auf das Einlesen von sogenannten Rohdaten und der Ansteuerung von Endstufen ist der Modulator (1) äußerst variabel einsetzbar. Mit optionaler stromgeregelter Auslegung von einer oder mehrer der Endstufen (4) (siehe Fig.1) des Modulators (1) sind anstelle der Modulatoren auch bspw. Stellmotoren direkt ansteuerbar.

Wenn der Modulator in einem Fahrzeugbremssystem mit zwei Fahrzeugachsen eingesetzt wird, so befindet sich üblicherweise an jedem Fahrzeugrad oder nur an jeder Fahrzeugachse jeweils ein Modulator. Diese Modulatoren stehen über den Datenbus mit einem Zentralmodul, z. B. bei einer Fahrzeugbremsanlage das Bremssteuergerät (EBS- bzw. ABS-ECU) in Verbindung. Es ist aber auch gemäß einer zweiten Ausführungsform möglich, das Zentralmodul in einem der verwendeten Modulator zu integrieren, wodurch die Anzahl der zu verbauenden Komponenten reduziert werden kann. Somit kann sich z. B. bei einem Fahrzeug mit vier Rädern entweder an jedem Fahrzeugrad ein Modulator befinden, wobei die vier Modulatoren mit einem Zentralmodul in Verbindung stehen, oder es wird das Zentralmodul in einem der vier Modulatoren integriert. Ferner können auch mehrere Modulatoren mit einem Zentralmodul zusammengefasst und z. B. in der Elektronikeinheit (ECU) eines Bremssystems integriert werden.

Wenn der Modulator in einem Bremssystem eingesetzt wird, so kann das ASIC gemäß einer dritten Ausführungsform mit Ventilen zu einer Druckmodulation kombiniert werden. Das Ergebnis ist ein 1 Kanal-Modulator (ein Druckregelkreis für eine Achse). Wird ein 2Kanal-Modulator (zwei Druckregelkreise) auf einer Achse benötigt, setzt man zwei ASICs in einen entsprechenden Ventilblock ein.

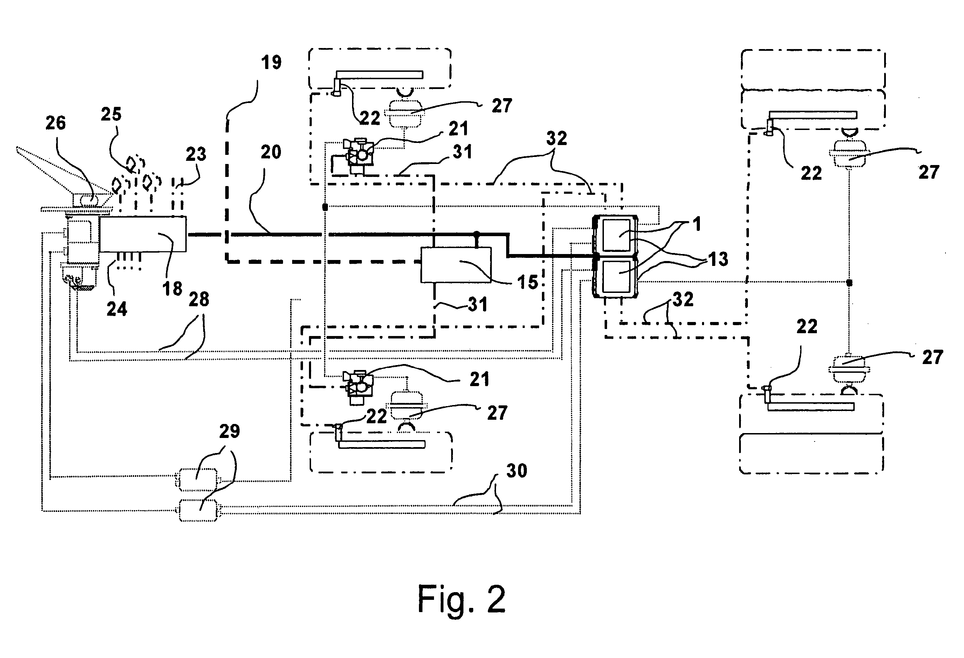

Fig. 2 zeigt den Einsatz des Modulators in einem Fahrzeug mit einem so genannten EBS 4S3M-System (4 sensierte Räder mit 3 modulierten Ausgängen in einem elektronischen Bremssystem). Die Fahrzeugdaten werden dabei in bekannter Weise von einem Fahrzeugdatenbus (19) direkt an die EBS-ECU (15) übermittelt. In dieser Ausführung stellt also die EBS-ECU (15) das Zentralmodul dar. Das Einlesen zusätzlicher Informationen erfolgt über ein CAN-Konverter Modul (18), welches hier als Bestandteil des Bremswertgebers (26) dargestellt ist. Alternativ ist für das CAN-Konverter Modul (18) aber auch eine separate Anordnung oder die Integration in die EBS-ECU (15), speziell bei Anordnung derselben in der Fahrzeugkabine denkbar. Ebenso kann die EBS-ECU (15) separat innerhalb oder außerhalb der Kabine oder integriert in Komponenten, wie bspw. Bremswertgeber (26) oder 2Kanal-Modulator (13) angeordnet werden. Vom CAN-Konverter Modul (18) werden die Informationen zum Status der Eingänge (24) sowie zum Bremswunsch des Fahrers aus dem Status der Signale des Bremswertgebers (26) auf einem Bremsen-CAN (20) zur EBS-ECU (15) übermittelt.

In dem Modulator (1) (siehe Fig. 1) werden durch den ASIC (2) (siehe Fig. 1) die von den Raddrehzahlsensoren (22) generierten und über elektrische Sensorleitung (32) übertragenen Signale soweit aufbereitet, dass die Rohdaten für die Ermittlung der Geschwindigkeit des Fahrzeugs über die Busschnittstelle (5) (siehe Fig.1) auf dem Bremsen-CAN (20) zur EBS-ECU (15) übertragen werden können. In analoger Weise erfolgt die Aufbereitung und Übertragung der am Drucksensoreingang (9) (siehe Fig. 1) sowie an weiteren möglichen analogen Eingängen anliegenden Signale.

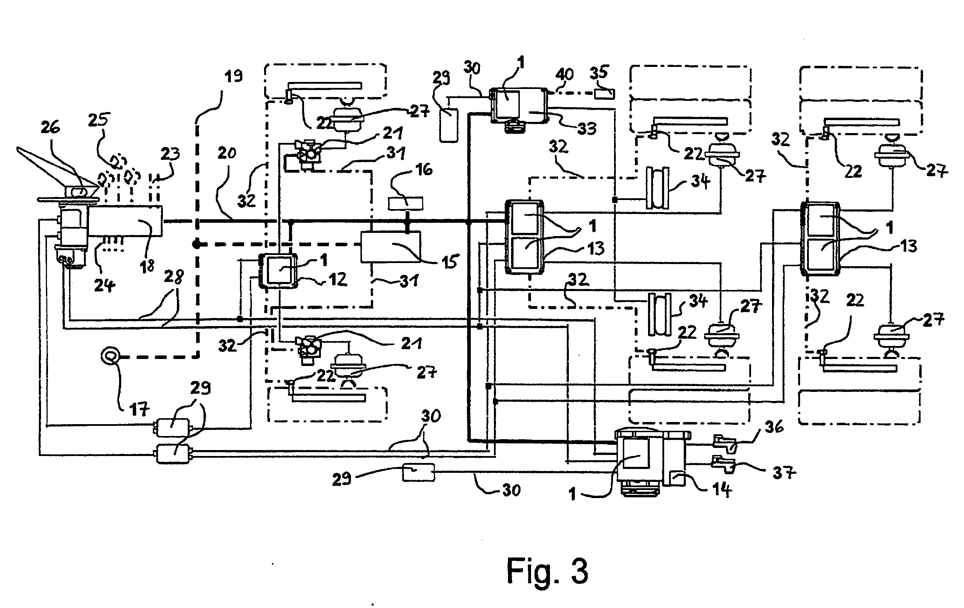

In der in Fig. 2 dargestellten Ausführung wird jeweils eine Achse des Fahrzeugs über eine Seite eines 2Kanal-Modulators (13) mit zwei integrierten Modulatoren (1) sensiert und gesteuert. Denkbar ist aber auch die Sensierung und Steuerung jeweils einer Achse über einen 1 Kanal-Modulator (12) (siehe Fig.3) mit einem integrierten Modulator (1). Aus den vom CAN-Konverter Modul (18) und den Modulatoren (1) über den Bremsen-CAN (20) zur EBS-ECU (15) übermittelten Werten werden in der EBS-ECU (15) Regelsignale generiert, und dann entsprechende Steuerbefehle über den Bremsen-CAN (20) zu den Modulatoren (1) übermittelt. Damit wird der Regelkreis der am 2Kanal-Modulator (13) angeschlossenen Räder über die EBS-ECU (15) geschlossen. Die Ansteuerung der Magnetventile im 2Kanal-Modulator (13) erfolgt auf Basis der über den Bremsen-CAN (20) übergebenen Steuersignale dann jeweils durch die Endstufen (4) (siehe Fig. 1) der Modulatoren (1) stromgeregelt oder alternativ mit High-oder Lowpegel. Die ABS Magnetregelventile (21) werden über elektrische Steuerleitungen (31) von der EBS-ECU (15) direkt angesteuert.

Mit Entfall der Magnetregelventile (21) und der Steuerleitungen (31) ergibt sich die EBS-Minimalkonfiguration 4S2M (4 sensierte Räder, 2 modulierte Ausgänge). Die Intelligenz der Modulatoren (1) wird dabei auf die Grundfunktionen der Hardware-Fehlererkennung, der Übergabe der aus den Sensoreingangssignalen gebildeten Rohdaten an die EBS-ECU (15), die Ansteuerung der Endstufen (4) (siehe Fig.1) gemäß der von der EBS-ECU (15) übergebenen Steuerparameter und die Gerätekonfigurierung reduziert.

Die weiteren Bauteile gemäß Fig. 1 betreffen Besonderheiten bei einer pneumatischen Nutzfahrzeugbremsanlage. Die pneumatische Nutzfahrzeugbremsanlage verfügt über Luftbehälter (29) zur Speicherung von Druckluft, wobei die Luftbehälter (29) über pneumatische Vorratsleitungen (30) über den 2Kanal-Modulator (13) mit Bremszylindern (27) in Verbindung stehen. Ferner ist auch noch der Bremswertgeber (26) über pneumatische Steuerleitungen (28) über den 2Kanal-Modulator (13) mit den Bremszylindern (27) verbunden. Weiterhin kann das CAN-Konverter Modul (18) noch weitere elektrische Ausgänge (23) und Warnlampen (25) aufweisen.

Fig. 3 zeigt den Einsatz des Modulators in einem so genannten EBS 6S6M-Systems eines elektronisch geregelten Fahrzeugbremssystems in einer möglichen Ausbaukonfiguration für ein dreiachsiges Fahrzeug. Dargestellt ist hier ein 6S6M-System (6 sensierte Räder, 6 modulierte Ausgänge) mit einem elektronischen Stabilitätsprogramm (ESC), einer Anhängeransteuerung und einer integrierten Luftfederregelung. In Erweiterung zum Blockschaltbild gemäß Fig. 2 erfolgt hier die Sensierung und Steuerung der Hinterachse sowie der Zusatzachse jeweils über zwei in einem 2Kanal-Modulator (13) integrierte Modulatoren (1). An der Vorderachse wird zusätzlich ein 1 Kanal-Modulator (12) mit integriertem Modulator (1) zur Sensierung und Steuerung eingesetzt. Aufgrund der Auslegung des Modulators (1) mit zwei Eingängen zur Sensierung der Raddrehzahl für den 1 Kanal-Modulator (12) mit der Konfiguration 2S1 M (2 sensierte Räder, 1 modulierter Ausgang) ergeben sich dann für den 2Kanal-Modulator (13) die möglichen Konfigurationen 2S2M bzw. 4S2M. Damit lassen sich beliebige Konfigurationen von Achs- und Radregelungen realisieren.

Weiterhin sind in Fig. 3 von der Achs- bzw. Radregelung abweichende Einsatzmöglichkeiten der Modulatoren (1) dargestellt. So erfolgt bspw. die Anhängeransteuerung, dargestellt über einen Kupplungskopf Vorrat (37) und einen Kupplungskopf Bremse (36), gemäß Fig. 3 über einen Anhängersteuermodulator (14) mit integriertem Modulator (1), wobei analog zur Rad- bzw. Achsregelung von dem Modulator (1) nur Rohdaten erfasst und an die EBS-ECU (15) über den Bremsen-CAN (20) übergeben werden. Die Auswertung der Rohdaten und die Berechnung der Steuerzeiten für die eigentliche Bremsdruckregelung erfolgt analog zur Radregelung in der EBS-ECU (15). Der Modulator (1) steuert dann entsprechend der übergebenen Steuerbefehle die Endstufen (4) (siehe FiG. 1) an.

In ähnlicher Weise wird auch die Niveauregelung der Luftfederung realisiert. Über ein Balgdruckregelventil (33) mit integriertem Modulator (1) wird über eine weitere Sensorleitung (40) ein Signal eines Niveausensors (35) ausgelesen und an die EBS-ECU (15) übermittelt. Über dieses Balgdruckventil (33) werden Luftfederbälge (34) zur Anhebung oder Absenkung der Zusatzachse mit Druckluft versorgt. Gegebenenfalls können über einen A/D-Wandler weitere Sensoren, wie bspw. Balgdruck, eingelesen und die Rohdaten übermittelt werden. Die Auswertung der Rohdaten und die Berechnung der Steuerzeiten für die eigentliche Balgdruckregelung erfolgt analog zur Radregelung in der EBS-ECU (15).

An dem Bremsen-CAN (20) kann ferner noch ein ESC Sensor Modul (16) angeschlossen sein, welches Fahrzustände des Fahrzeugs, insbesondere für eine elektronische Stabilitätsregelung, erfasst. Weiterhin können auch noch Signale eines Lenkwinkelsensors (17), welcher mit dem Fahrzeugdatenbus (19) verbunden ist, ausgewertet werden.

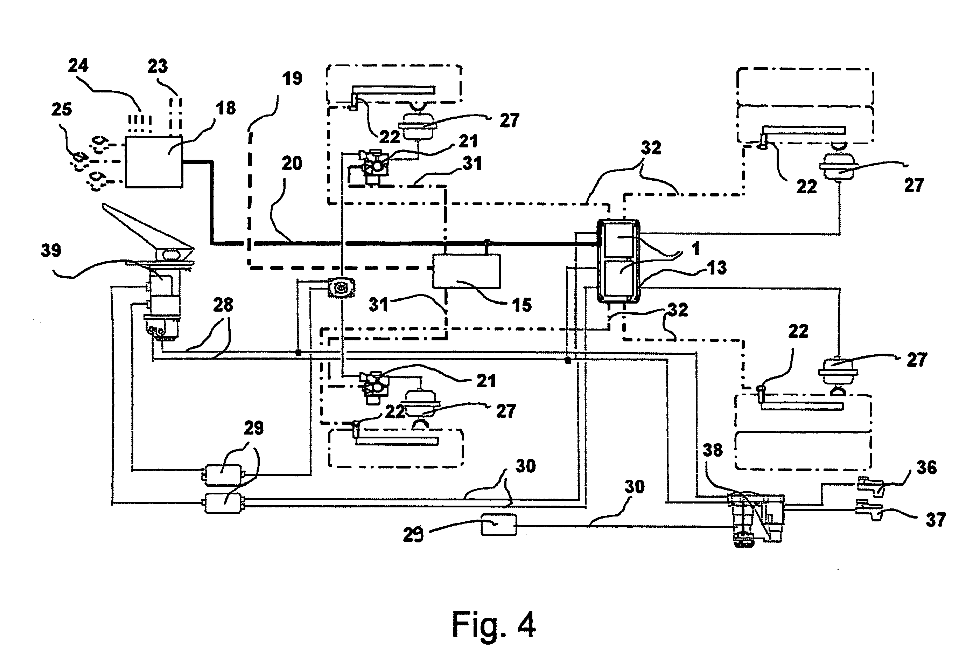

Fig. 4 zeigt den Einsatz des Modulators in einem so genannten ABS 4S4M-Systems eines konventionellen Antiblockiersystems eines Fahrzeugs, wobei hier anstatt eines Bremswertgebers (26) (siehe Fig. 1 und 2) ein Fußbremsventil (39) verwendet wird. Hier erfolgt für ein 4S4M-System (4 sensierte Räder, 4 modulierte Ausgänge) das Einlesen der achs- bzw. radbezogenen Daten über ein 2Kanal-Modulator (13) mit integriertem Modulator (1). Die Übermittlung der Rohdaten an die ABS-ECU (15) und die eigentliche Regelung erfolgt im Wesentlichen wie bereits in Fig. 2 beschrieben. Wahlweise ist bei Anordnung der ABS-ECU (15) in der Fahrzeugkabine die Integration des CAN-Konverter Moduls (18) in die ABS-ECU (15) oder bei Anordnung außerhalb der Kabine die Integration der ABS-ECU (15) im 2Kanal-Modulator (13) möglich.

Die veränderte Funktionalität des 2Kanal-Modulators (13) hinsichtlich Ansteuerung der Ventilmagneten zur Druckregelung nur im ABS- bzw. ASR-Fall (ASR: Antriebsschlupfregelung) oder bei erweitertem System auch während der ESC-Regelung wird dabei ausschließlich über die ABS-ECU (15) gesteuert.

Alternativ ist für die Vorderachse auch die Integration eines Modulators (1) in ein ABS Magnetregelventil (21) möglich. Die Ansteuerung der Ventilmagnete erfolgt dann analog zum 2Kanal-Modulator (13) auf Basis der über den Bremsen CAN (20) übermittelten Steuerbefehle der ABS-ECU (15). Damit kann dann in Verbindung mit dem 2Kanal-Modulator (13) bspw. ein 6S4M-System (6 sensierte Räder, 4 modulierte Ausgänge mit seitenweiser Select Low Regelung beider Hinterachsen) dargestellt werden.

Alternativ ist auch an der Vorderachse der Einsatz eines 1 Kanal-Modulators (12) mit integriertem Modulator (1) zum Einlesen der Rohdaten und der Ansteuerung der Ventilmagneten zur Druckregelung während der ESC- bzw. RSC-Regelung (RSC: Roll Stability Control/ Kippschutz Stabilitätskontrolle) möglich. Die ABS-Magnetregelventile (22) werden dann, wie in Fig. 4 dargestellt, von der ABS-ECU (15) direkt gesteuert.

Ferner kann auch das dargestellte Fahrzeugsystem ein pneumatisches Anhängersteuerventil (38) aufweisen, wobei über dieses Anhängersteuerventil (38) ein Fahrzeuganhanger (hier nicht dargestellt) mit Druckluft für die Bremsbetätigung, dargestellt über den Kupplungskopf Bremse (36), und mit Druckluft für weitere Druckluftverbraucher im Anhänger, dargestellt über den Kupplungskopf Vorrat (37), versorgt werden kann.

### Bezugszeichen

- 1: Modulator
- 2: ASIC
- 3: Hauptprozessor
- 4: Endstufe
- 5: Ein- bzw. Ausgänge für einen Datenbus/ Busschnittstelle
- 6: Eingänge für Raddrehzahlsensoren
- 7: weiterer Eingang
- 8: Ausgänge
- 9: zusätzliche Eingänge
- 10: Bustreiber
- 11: Signalaufbereitung
- 12: 1Kanal-Modulator
- 13: 2Kanal-Modulator
- 14: Anhängersteuermodulator
- 15: EBS/ABS- ECU (Zentralmodul)
- 16: ESC Sensor Modul
- 17: Lenkwinkelsensor
- 18: CAN Konverter Modul
- 19: Fahrzeugdatenbus (CAN)
- 20: Bremsen-CAN
- 21: ABS Magnetregelventil
- 22: Raddrehzahlsensor
- 23: elektrische Ausgänge/Lasten
- 24: elektrische Eingänge/Lasten
- 25: Warnlampe
- 26: Bremswertgeber
- 27: Bremszylinder
- 28: pneumatische Steuerleitung
- 29: Luftbehälter
- 30: pneumatische Vorratsleitung
- 31: elektrische Steuerleitung
- 32: elektrische Sensorleitung
- 33: Balgdruckregelventil
- 34: Luftfederbalg
- 35: Niveausensor
- 36: Kupplungskopf Bremse
- 37: Kupplungskopf Vorrat
- 38: Anhängersteuerventil
- 39: Fußbremsventil
- 40: weitere Sensorleitung

## Patentansprüche

1. Fahrzeugsystem mit einem Zentralmodul (15) und wenigstens einem Modulator (1), insbesondere für ein Bremssystem in einem Kraftfahrzeug, welcher über einen Datenbus (20) mit einem Zentralmodul (15) in Verbindung steht, wobei der Modulator (1) mindestens einen Eingang (6) zur Erfassung von Messwerten und mindestens einen Ausgang (8) zur Ansteuerung mindestens eines elektromagnetischen Ventils aufweist, **dadurch gekennzeichnet, dass** erst durch die Verbindung des Modulators (1) mit dem Zentralmodul (15) über den Datenbus (20) ein Regelkreis zur Betätigung des mindestens einen elektromagnetischen Ventils derart geschlossen ist, dass die durch den Modulator (1) erfassten Messwerte an das Zentralmodul (15) übertragen werden, wobei aus diesen Messwerten erst in dem Zentralmodul (15) Steuerbefehle zur Betätigung des mindestens einen elektromagnetischen Ventils berechnet werden, und wobei diese Steuerbefehle über den Datenbus (20) an den Modulator (1) übertragen werden, damit der Modulator (1) das mindestens eine elektromagnetische Ventil in Abhängigkeit der über den Datenbus (20) übertragenen Steuerbefehle ansteuert.

2. Fahrzeugsystem nach Anspruch 1, **dadurch gekennzeichnet, dass** der Modulator (1) weiterhin ein ASIC (2), einen Eingang (7) für die Spannungsversorgung des Modulators (1) sowie mindestens einen Ein-/ bzw. Ausgang (5) für den Datenbus (20) umfasst.

3. Fahrzeugsystem nach Anspruch 2, **dadurch gekennzeichnet, dass** das ASIC (2) einen Hauptprozessor (3) sowie Endstufen (4) zum Betätigen der elektromagnetischen Ventile aufweist.

4. Fahrzeugsystem nach Anspruch 2 oder 3, **dadurch gekennzeichnet, dass** das ASIC (2) einen Hauptprozessor (3) zur Ansteuerung von Endstufen (4) aufweist und die Endstufen (4) außerhalb des ASIC's (2) angeordnet sind.

5. Fahrzeugsystem nach Anspruch 1, **dadurch gekennzeichnet, dass** der Modulator (1) die Steuerbefehle zur Betätigung des mindestens einen elektromagnetischen Ventils in Form eines EIN-/AUS-Telegramms erhält.

6. Fahrzeugsystem nach Anspruch 1, **dadurch gekennzeichnet, dass** der verwendete Datenbus (2) eine Übertragungsrate ≧ 1 Mbit/s aufweist.

7. Fahrzeugsystem nach Anspruch 6, **dadurch gekennzeichnet, dass** der Datenbus (20) die Steuerbefehle mit einer Wiederholrate ≦ 5ms überträgt.

8. System nach Anspruch 6 oder 7, **dadurch gekennzeichnet, dass** der Datenbus (20) ein sogenannter Flexray-Datenbus ist.

9. Fahrzeugsystem nach einem der vorhergehenden Ansprüche, **dadurch gekennzeichnet, dass** das Fahrzeugsystem mindestens zwei Modulatoren (1) gemäß Anspruch 1 und ein Zentralmodul (15) aufweist, wobei das Zentralmodul (15) in einem Modulator (1) integriert ist.

10. Fahrzeugsystem nach einem der vorhergehenden Ansprüche, **dadurch gekennzeichnet, dass** der Modulator erst durch seinen Einbau in dem Fahrzeugsystem seine Bestimmung erfährt.

11. Modulator, der zum Betrieb in einem Fahrzeugsystem nach einem der vorhergehenden Ansprüche eingerichtet ist.

12. Zentralmodul, das zum Betrieb in einem Fahrzeugsystem nach einem der Ansprüche 1 bis 10 eingerichtet ist.

13. Verwendung des Modulators gemäß Anspruch 1 als Druckmodulator in einer Luftfederungsanlage oder in einem elektronischen Bremssystem (EBS) oder in einem konventionellen Bremssystem, wobei das Bremssystem mit einem Anti-Blockiersystem (ABS) oder mit einem elektronischen Stabilitätsprogramm (ESP) ausgerüstet ist.

14. Verwendung des Modulators gemäß Anspruch 1 als Stellglied zur Ansteuerung von weg- und/oder kraftsensierten Elektromotoren.

## Claims

1. Vehicle system having a central module (15) and at least one modulator (1), in particular for a brake system in a motor vehicle, which is connected to a central module (15) via a data bus (20), wherein the modulator (1) has at least one input (6) for acquiring measured values and at least one output (8) for actuating at least one solenoid valve, **characterized in that** a control circuit for activating the at least one solenoid valve is first closed by means of the connection of the modulator (1) to the central module (15) via the data bus (20) in such a way that the measured values acquired by the modulator (1) are transmitted to the central module (15), wherein control commands for activating the at least one solenoid valve are first calculated from these measured values in the central module (15), and wherein these control commands are transmitted to the modulator (1) via the data bus (20) so that the modulator (1) actuates the at least one solenoid valve as a function of the control commands transmitted via the data bus (20).

2. Vehicle system according to Claim 1, **characterized in that** the modulator (1) also comprises an ASIC (2), an input (7) for the voltage supply of the modulator (1) and at least one input/output (5) for the data bus (20).

3. Vehicle system according to Claim 2, **characterized in that** the ASIC (2) has a main processor (3) and output stages (4) for activating the solenoid valves.

4. Vehicle system according to Claim 2 or 3, **characterized in that** the ASIC (2) has a main processor (3) for actuating output stages (4), and the output stages (4) are arranged outside the ASIC (2).

5. Vehicle system according to Claim 1, **characterized in that** the modulator (1) receives the control commands for activating the at least one solenoid valve in the form of an ON/OFF telegram.

6. Vehicle system according to Claim 1, **characterized in that** the data bus (20) which is used has a transmission rate ≥ 1 Mbit/s.

7. Vehicle system according to Claim 6, **characterized in that** the data bus (20) transmits the control commands with a repetition rate ≤ 5 ms.

8. System according to Claim 6 or 7, **characterized in that** the data bus (20) is what is referred to as a Flexray data bus.

9. Vehicle system according to one of the preceding claims, **characterized in that** the vehicle system has at least two modulators (1) according to Claim 1 and a central module (15), wherein the central module (15) is integrated into a modulator (1).

10. Vehicle system according to one of the preceding claims, **characterized in that** the modulator is not determined until as a result of its installation in the vehicle system.

11. Modulator which is configured for operation in a vehicle system according to one of the preceding claims.

12. Central module which is configured for operation in a vehicle system according to one of Claims 1 to 10.

13. Use of the modulator according to Claim 1 as a pressure modulator in a pneumatic suspension system or in an electronic brake system (EBS) or in a conventional brake system, wherein the brake system is equipped with an anti-lock brake system (ABS) or with an electronic stability program (ESP).

14. Use of the modulator according to Claim 1 as an actuator for actuating electric motors with travel sensors and/or force sensors.

## Revendications

1. Système de véhicule comportant un module central (15) et au moins un modulateur (1), notamment pour un système de freinage dans un véhicule automobile, qui est en liaison par l'intermédiaire d'un bus de données (20) avec un module central (15), dans lequel le modulateur (1) présente au moins une entrée (6) pour détecter des valeurs de mesure et au moins une sortie (8) pour piloter au moins une soupape électromagnétique, **caractérisé en ce que** seulement au moyen de la liaison du modulateur (1) au module central (15) par l'intermédiaire du bus de données (20), un circuit de régulation pour actionner l'au moins une soupape électromagnétique est fermé de telle sorte que les valeurs de mesure détectées par le modulateur (1) sont transférées au module central (15), dans lequel d'après ces valeurs de mesure des injonctions de commande pour actionner l'au moins une soupape électromagnétique sont seulement calculées dans le module central (15), et dans lequel ces injections de commande sont transmises par l'intermédiaire du bus de données (20) au modulateur (1), afin que le modulateur (1) pilote l'au moins une soupape électromagnétique en fonction des injonctions de commande transmises par l'intermédiaire du bus de données (20).

2. Système de véhicule selon la revendication 1, **caractérisé en ce que** le modulateur (1) comprend en outre un ASIC (2), une entrée (7) pour l'alimentation en tension du modulateur (1) ainsi qu'au moins une entrée ou sortie (5) pour le bus de données (20).

3. Système de véhicule selon la revendication 2, **caractérisé en ce que** l'ASIC (2) présente un processeur principal (3) ainsi que des étages finaux (4) pour actionner les soupapes électromagnétiques.

4. Système de véhicule selon les revendications 2 ou 3, **caractérisé en ce que** l'ASIC (2) présente un processeur principal (3) pour piloter des étages finaux (4) et les étages finaux (4) sont disposés à l'extérieur de l'ASIC (2).

5. Système de véhicule selon la revendication 1, **caractérisé en ce que** le modulateur (1) obtient les injections de commande pour l'actionnement de l'au moins une soupape électromagnétique sous la forme d'un télégramme ON/OFF.

6. Système de véhicule selon la revendication 1, **caractérisé en ce que** le bus de données (20) employé présente un débit de transmission ≥ 1 Mbit/s.

7. Système de véhicule selon la revendication 6, **caractérisé en ce que** le bus de données (20) transmet les injections de commande avec un taux de répétition ≤ 5 ms.

8. Système selon les revendications 6 ou 7, **caractérisé en ce que** le bus de données (20) est ce que l'on appelle un bus de données Flexray.

9. Système de véhicule selon une des revendications précédentes, **caractérisé en ce que** le système de véhicule automobile présente au moins deux modulateurs (1) selon la revendication 1 et un module central (15), dans lequel le module central (15) est intégré dans un modulateur (1).

10. Système de véhicule selon une des revendications précédentes, **caractérisé en ce que** le modulateur apprend son affectation seulement après son montage dans le système de véhicule automobile.

11. Modulateur, qui est conçu afin de fonctionner dans un système de véhicule automobile selon une des revendications précédentes.

12. Module central, qui est conçu afin de fonctionner dans un système de véhicule automobile selon une des revendications 1 à 10.

13. Utilisation du modulateur selon la revendication 1 comme modulateur de pression dans une installation de suspension pneumatique ou dans un système de freinage électronique (EBS) ou dans un système de freinage classique, dans laquelle le système de freinage est équipé d'un système antiblocage (ABS) ou d'un programme de stabilité électronique (ESP).

14. Utilisateur du modulateur selon la revendication 1 comme organe de réglage pour piloter des moteurs électriques à capteur de force et/ou de trajet.
